# EUROPEAN PATENT APPLICATION

(11) **EP 3 148 156 A1**
(43) Date of publication of application: **29.03.2017**
(21) Application number: 14892853.4
(22) Date of filing: 10.07.2014
(51) Int. Cl.: H04L 29/08

(54) **SENDING METHOD AND APPARATUS AND COMPUTER STORAGE MEDIUM OF NOTIFICATION MESSAGE**

(30) Priority: 21.05.2014 CN 201410216076
(71) Applicant: ZTE Corporation, Shenzhen city, Guangdong 518057 (CN)
(72) Inventor: WU, Hao, Shenzhen Guangdong 518057 (CN)
(74) Representative: Benson, Christopher
(86) International application number: PCT/CN2014/081953
(87) International publication number: WO 2015/176365

(57) **Abstract**

Embodiments of the present invention disclose a sending method, an apparatus, and a computer storage medium of a notification message. In the method, a receiving end receives a request for establishing a subscribed resource from a sending end, herein the request for establishing a subscribed resource carries a notification sending policy and a sending address of a notification message, and the notification sending policy is used for the sending end to indicate, when a resource subscribed by the receiving end is changed, the receiving end to send one or more notification messages to the sending end in a sending mode designated by the sending end; and when the resource subscribed by the sending end is changed, the receiving end sends one or more notification messages to the sending address of the notification message according to the notification sending policy.

## Description

### Technical Field

The present invention relates to a communication technology, in particular to a sending method and an apparatus, and a computer storage medium of a notification message.

### Background of the Related Art

A Machine to Machine (M2M) communication network consists of M2M nodes and a bearer network. The M2M nodes realize mutual communication through the bearer network. One M2M node may include but is not limited to an application entity or a common service entity. The application entity is a logic unit which actually executes an M2M application, while the common service entity is a logic unit which manages and serves the application.

In an M2M system architecture, an application node is an execution node at a terminal end, such as an intelligent electricity meter, a temperature measurement and control sensor, a fire alarm or an intelligent domestic appliance. An intermediate node is middleware which connects the execution node at the terminal end to a network-side server, such as a gateway; and a basic node is the network-side server, herein an application entity which is registered to the basic node usually is management software or a management platform of an M2M service provider.

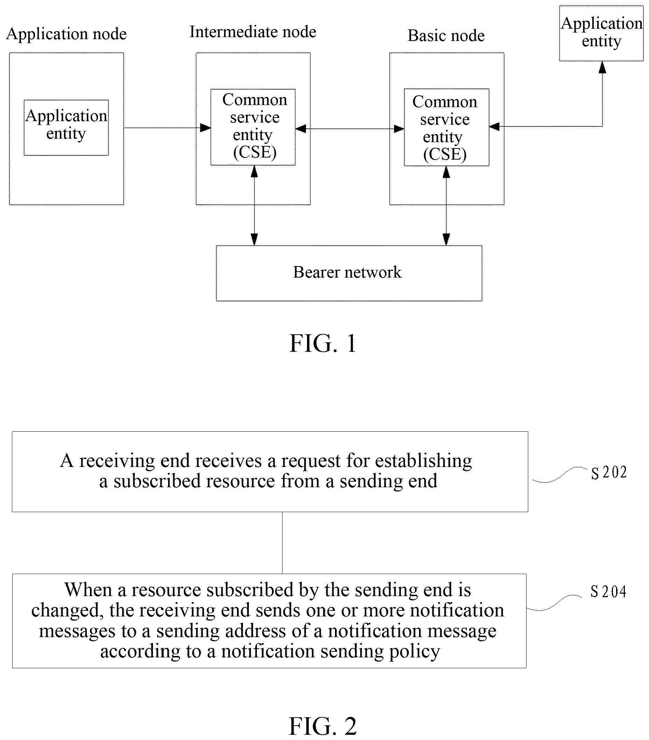

FIG. 1 is a schematic diagram of an M2M system architecture in the related art. As illustrated in FIG. 1, communication between M2M applications is generally implemented through interaction between Common Service Entities (CSEs). The communication is based on a premise that the M2M applications need to be firstly registered to local CSEs (for example, an application entity in an application node in FIG. 1 needs to be registered to a CSE in an intermediate node, and then the CSE in the intermediate node is the local CSE of the application entity in the application node), and then interaction between the M2M applications can be implemented through communication between CSEs.

An application node is a physical entity, and an Application Entity (AE) is a logic unit and is a logic unit which actually executes an application on the physical entity, i.e., the application node.

When the AE is registered to the local CSE, the AE needs to provide a security certificate which can identify validity thereof to the local CSE for verification thereof by the CSE. The AE cannot be registered to the local CSE until the verification is passed. At the same time, the AE further needs to provide a registration name recommended by the AE to the local CSE for reference.

Moreover, the registered application may also create a resource related to the application on the local CSE as a sub-resource of an application resource. For example, after the application is registered, the local CSE will create a resource "application", the application may also create a resource "container" under the resource "application" in order to save data of the application, and the resource "container" is used for storing application data. The AE may acquire a message indicating whether a certain resource is changed by means of subscription. When an attribute or a sub-resource of the subscribed resource is changed, e.g., a value of the attribute is modified, the sub-resource is deleted or a sub-resource is newly created, the CSE at which the resource is located may send a notification message to the AE to notify the AE that the resource concerned thereby has already been modified. The subscription of the resource is implemented through the AE by creating a sub-resource of a type "subscription" on a resource that the CSE wants to subscribe.

In the related art, the resource subscribed by the AE or the CSE may include more attributes and sub-resources, and thus a situation that these attributes and sub-resources are frequently modified may occur. However, according to the currently adopted subscription rule, a notification message will be sent to the AE or the CSE at each time of modification, resulting that the AE or the CSE frequently receives a great number of notification messages.

### Summary of the Invention

The embodiments of the present invention provide a sending method and an apparatus, and a computer storage medium of a notification message, so as to solve the problems that an AE or a CSE frequently receives a great number of notification messages and network resources and local storage spaces are thus wasted when resources subscribed by the AE or the CSE are changed in the related art.

According to one aspect of the embodiment of the present invention, the embodiment of present invention provides a sending method of a notification message.

The sending method of the notification message according to the embodiment of the present invention includes: a receiving end receiving a request for establishing a subscribed resource from a sending end, herein the request for establishing a subscribed resource carries a notification sending policy and a sending address of a notification message, and the notification sending policy is used for the sending end to indicate, when a resource subscribed by the receiving end is changed, the receiving end to send one or more notification messages to the sending end in a sending mode designated by the sending end; and when the resource subscribed by the sending end is changed, the receiving end sending one or more notification messages to the sending address of the notification message according to the notification sending policy.

Alternatively, the notification sending policy includes: the maximum number of notification messages sent by the receiving end to the sending address of the notification message, a sending mode of a notification message and a sending rule parameter associated with the sending mode; and when the sending mode is indicated as a mode of sending notification messages in batch processing, the receiving end sending one or more notification messages to the sending address of the notification message according to the notification sending policy includes: the receiving end judging whether the number of currently stored notification messages is smaller than or equal to a difference between the maximum number and a first number, herein the first number is the number of notification messages which have already been sent by the receiving end to the sending address of the notification message, and the maximum number and the first number are positive integers; if yes, the receiving end sending one or more notification messages to the sending address of the notification message according to the sending rule parameter; and if no, the receiving end sending one or more notification messages to the sending address of the notification message according to value of the difference.

Alternatively, the sending rule parameter includes: a preset number and/or a preset time length; and the receiving end sending one or more notification messages to the sending address of the notification message according to the sending rule parameter includes performing one of the following operations: when the sending rule parameter is the preset number, under a situation that the number of notification messages which are stored at the receiving end and are to be sent to the sending address of the notification message has already reached the preset number, the receiving end sending the preset number of notification messages to the sending address of the notification message; when the sending rule parameter is the preset time length, under a situation that a time of notification messages which are stored at the receiving end and are to be sent to the sending address of the notification message has already reached the preset time length, the receiving end sending all currently stored notification messages to the sending address of the notification message; and when the sending rule parameter is the preset number and the preset time length, sending one or more notification messages to the sending address of the notification message according to the sending rule parameter which is firstly satisfied.

Alternatively, the notification sending policy includes: the maximum number of notification messages sent by the receiving end to the sending address of the notification message, a sending mode of a notification message and a sending rule parameter associated with the sending mode; and when the sending mode is indicated as a mode of sending a latest generated notification message only, the receiving end sending one notification message to the sending address of the notification message according to the notification sending policy includes: the receiving end judging whether a first number is smaller than the maximum number, herein the first number is the number of notification messages which have already been sent by the receiving end to the sending address of the notification message; and if yes, the receiving end sending the latest generated notification message to the sending address of the notification message according to the sending rule parameter.

Alternatively, the sending rule parameter includes: a preset number and/or preset time length; and the receiving end sending the latest generated notification message to the sending address of the notification message according to the sending rule parameter includes performing one of the following operations: when the sending rule parameter is the preset number, under a situation that the number of notification messages which are stored at the receiving end and are to be sent to the sending address of the notification message has already reached the preset number, the receiving end sending the latest generated notification message in the preset number of notification messages to the sending address of the notification message; when the sending rule parameter is the preset time length, under a situation that a time of notification messages which are stored at the receiving end and are to be sent to the sending address of the notification message has already reached the preset time length, the receiving end sending the latest generated notification message of all currently stored notification messages to the sending address of the notification message; and when the sending rule parameter is the preset number and the preset time length, sending the latest generated notification message to the sending address of the notification message according to the sending rule parameter which is firstly satisfied.

Alternatively, the sending end is one of the following: a first CSE and an AE; and the receiving end is a second CSE.

According to another aspect of the embodiment of the present invention, the embodiment of the present invention provides a sending apparatus of a notification message.

The sending apparatus of the notification message according to the embodiment of the present invention includes: a receiving module arranged to receive a request for establishing a subscribed resource from a sending end, herein the request for establishing a subscribed resource carries a notification sending policy and a sending address of a notification message, and the notification sending policy is used for the sending end to indicate, when a resource subscribed by a receiving end is changed, the receiving end to send one or more notification messages to the sending end in a sending mode designated by the sending end; and a sending module arranged to, when the resource subscribed by the sending end is changed, send the one or more notification messages to the sending address of the notification message according to the notification sending policy.

Alternatively, the notification sending policy includes: the maximum number of notification messages sent by the receiving end to the sending address of the notification message, a sending mode of a notification message and a sending rule parameter associated with the sending mode; and the sending module includes: a first judgment unit arranged to, when the sending mode is indicated as a mode of sending notification messages in batch processing, judge whether the number of currently stored notification messages is smaller than a difference between the maximum number and a first number, herein the first number is the number of notification messages which have already been sent by the receiving end to the sending address of the notification message, and the maximum number and the first number are positive integers; a first sending unit arranged to, if an output of the first judgment unit is yes, send one or more notification messages to the sending address of the notification message according to the sending rule parameter; and a second sending unit arranged to, if the output of the first judgment unit is no, send one or more notification messages to the sending address of the notification message according to value of the difference.

Alternatively, the sending rule parameter includes: a preset number and/or a preset time length; and the first sending unit is arranged to perform one of the following operations: when the sending rule parameter is the preset number, under a situation that the number of currently stored notification messages which are to be sent to the sending address of the notification message has already reached the preset number, sending the preset number of notification messages to the sending address of the notification message; when the sending rule parameter is the preset time length, under a situation that a time of currently stored notification messages which are to be sent to the sending address of the notification message has already reached the preset time length, sending all currently stored notification messages to the sending address of the notification message; and when the sending rule parameter is the preset number and the preset time length, sending one or more notification messages to the sending address of the notification message according to the sending rule parameter which is firstly satisfied.

Alternatively, the notification sending policy includes: the maximum number of notification messages sent by the receiving end to the sending address of the notification message, a sending mode of a notification message and a sending rule parameter associated with the sending mode; and the sending module includes: a second judgment unit arranged to, when the sending mode is indicated as a mode of sending a latest generated notification message only, judge whether a first number is smaller than the maximum number, herein the first number is the number of notification messages which have already been sent by the receiving end to the sending address of the notification message; and a third sending unit arranged to, if an output of the second judgment unit is yes, send the latest generated notification message to the sending address of the notification message according to the sending rule parameter.

Alternatively, the sending rule parameter includes: a preset number and/or preset time length; and the third sending unit is arranged to perform one of the following operations: when the sending rule parameter is the preset number, under a situation that the number of currently stored notification messages which are to be sent to the sending address of the notification message has already reached the preset number, sending the latest generated notification message in the preset number of notification messages to the sending address of the notification message; when the sending rule parameter is the preset time length, under a situation that a time of currently stored notification messages which are to be sent to the sending address of the notification message has already reached the preset time length, sending the latest generated notification message of all currently stored notification messages to the sending address of the notification message; and when the sending rule parameter is the preset number and the preset time length, sending the latest generated notification message to the sending address of the notification message according to the sending rule parameter which is firstly satisfied.

Alternatively, the sending end is one of the following: a first CSE and an AE; and the receiving end is a second CSE.

According to another aspect of the embodiment of the present invention, the embodiment of the present invention provides a computer storage medium storing computer-executable instructions, which are used for executing the above-mentioned notification message sending method.

Through the embodiments of the present invention, by adopting the solution that a receiving end receives a request for establishing a subscribed resource from a sending end, herein the request for establishing a subscribed resource carries a notification sending policy and a sending address of a notification message, and the notification sending policy is used for the sending end to indicate, when a resource subscribed by the receiving end is changed, the receiving end to send one or more notification messages to the sending end in a sending mode designated by the sending end; and when the resource subscribed by the sending end is changed, the receiving end sends one or more notification messages to the sending address of the notification message according to the notification sending policy, the problems that an AE or a CSE frequently receives a great number of notification messages and network resources and local storage spaces are thus wasted when resources subscribed by the AE or the CSE are changed in the related art are solved, and thereby the network resources and the local storage spaces of the AE or the CSE are saved.

### Brief Description of Drawings

FIG. 1 is a schematic diagram of an M2M system architecture according to the related art;
FIG. 2 is a flowchart of a sending method of a notification message according to the embodiment of the present invention;
FIG. 3 is a structural diagram 1 of a sending apparatus of a notification message according to the embodiment of the present invention; and
FIG. 4 is a structural diagram 2 of a sending apparatus of a notification message according to the embodiment of the present invention.

### Preferred Embodiments of the Invention

The present invention will be described below in detail with reference to the drawings in combination with the embodiments. It needs to be stated that the embodiments in the present application and the features in the embodiments may be mutually combined without conflict.

FIG. 2 is a flowchart of a sending method of a notification message according to the embodiment of the present invention. As illustrated in FIG. 2, the method may include the following processing steps:
In step S202, a receiving end receives a request for establishing a subscribed resource from a sending end. Herein the request for establishing a subscribed resource carries a notification sending policy and a sending address of a notification message. The notification sending policy is used for the sending end to indicate, , the receiving end to send one or more notification messages to the sending end in a sending mode designated by the sending end, when a resource subscribed by the receiving end is changed.
In step S204, when the resource subscribed by the sending end is changed, the receiving end sends one or more notification messages to the sending address of the notification message according to the notification sending policy.

In the related art, when resources subscribed by an AE or a CSE are changed, the AE or the CSE will frequently receive a great number of notification messages such that network resources and local storage spaces are wasted. By adopting the method illustrated in FIG. 2, the sending end may flexibly select a mode of receiving notification messages according to its actual demands (e.g., it is not expected to frequently receive notification messages, or it is not expected to receive a great number of notification messages since storage spaces of a physical device in which the sending end is located are limited). Thereby, the problems that the AE or the CSE frequently receives a great number of notification messages and the network resources and local storage spaces are thus wasted when resources subscribed by the AE or the CSE are changed in the related art are solved, and thus the network resources and the local storage spaces of the AE or the CSE are saved.

In preferred implementation processes, the above-mentioned sending end may be one of the following: a first CSE and an AE, and the receiving end may be a second CSE.

Alternatively, the above-mentioned notification sending policy may include: the maximum number of notification messages sent by the receiving end to the sending address of the notification message, a sending mode of a notification message and a sending rule parameter associated with the sending mode. And in step S204, when the sending mode is indicated as a mode of sending notification messages in batch processing, the receiving end sending one or more notification messages to the sending address of the notification message according to the notification sending policy may include the following operations:
in step S1, the receiving end judges whether the number of currently stored notification messages is smaller than or equal to a difference between the maximum number and a first number, herein the first number is the number of notification messages which have already been sent by the receiving end to the sending address of the notification message, and the maximum number and the first number are positive integers;
in step S2, if the number of currently stored notification messages is smaller than or equal to a difference between the maximum number and a first number, the receiving end sends the one or more notification messages to the sending address of the notification message according to the sending rule parameter; and
in step S3, if no, the receiving end sends the one or more notification messages to the sending address of the notification message according to the value of the difference.

Alternatively, the sending rule parameter includes: a preset number and/or a preset time length. And in step S2, the receiving end sending the one or more notification messages to the sending address of the notification message according to the sending rule parameter includes one of the following operations:
in step S21, when the sending rule parameter is the preset number, and under a situation that the number of notification messages which are stored at the receiving end and are to be sent to the sending address of the notification message has already reached the preset number, the preset number of notification messages are sent to the sending address of the notification message; or
in step S22, when the sending rule parameter is the preset time length, under a situation that a time of notification messages which are stored at the receiving end and are to be sent to the sending address of the notification message has already reached the preset time length, all currently stored notification messages are sent to the sending address of the notification message; and
in step S23, when the sending rule parameter is the preset number and the preset time length, one or more notification messages are sent to the sending address of the notification message according to a sending rule parameter which is firstly satisfied.

In preferred embodiments, the sending end (e.g., AE) sends a request for establishing a subscribed resource to the receiving end (e.g., CSE), herein the request for establishing a subscribed resource carries a notification sending policy and the notification sending policy may include, but is not limited to, at least one of the following:
(1) notification message number (equivalent to the maximum number);
(2) notification sending address;
(3) notification sending mode; and
(4) notification sending rule associated with notification sending mode, herein the notification sending rule may include but is not limited to at least one of the following: aggregate number (equivalent to the above-mentioned preset number) and waiting time (equivalent to the above-mentioned preset time length).

The CSE, after verifying that a request initiating party has an authority of creating a subscribed resource, creates the subscribed resource and simultaneously creates an attribute corresponding to the notification sending policy in the request for establishing a subscribed resource. If the notification sending mode in the attribute of the subscribed resource is indicated as sending in batch processing (i.e., sending a plurality of notification messages), when a sub-resource or an attribute of the subscribed resource is changed (deleted, added or modified), the CSE temporarily saves the notification messages and respectively performs processing according to the following situations:
Situation 1: if the attribute of the subscribed resource simultaneously includes the aggregate number and waiting time, when one of the following conditions is firstly satisfied, the CSE sends the saved notification messages thereof to a destination address in an attribute "notification sending address":
   condition i) the number of the saved notification messages reaches the aggregate number in the attribute of the subscribed resource;
   condition ii) a saving time of the notification messages reaches the waiting time in the attribute of the subscribed resource.
Situation 2: if the attribute of the subscribed resource only includes the aggregate number, when the above-mentioned condition i) is satisfied, the CSE sends the saved notification messages to the destination address in the attribute "notification sending address".
Situation 3: if the attribute of the subscribed resource only includes the waiting time, when the above-mentioned condition ii) is satisfied, the CSE sends the saved notification messages to the destination address in the attribute "notification sending address".
Situation 4: whether the attribute of the subscribed resource includes the aggregate number, the waiting time or both, if the number of the saved notification messages reaches the notification message number in the attribute of the subscribed resource, the CSE sends the saved notification messages to the destination address in the attribute "notification sending address"; or when only one of condition i) and condition ii) is satisfied, only latest generated notification messages, the number of which is equal to the notification message number in the attribute of the subscribed resource, are selected for sending.

Alternatively, the above-mentioned notification sending policy may include: the maximum number of notification messages sent by the receiving end to the sending address of the notification message, a sending mode of a notification message and a sending rule parameter associated with the sending mode; and in step S204, when the sending mode is indicated as a mode of sending a latest generated notification message only, the receiving end sending one notification message to the sending address of the notification message according to the notification sending policy may include the following steps:
in step S4, the receiving end judges whether a first number is smaller than the maximum number, herein the first number is the number of notification messages which have already been sent by the receiving end to the sending address of the notification message; and
in step S5, if yes, the receiving end sends the latest generated notification message to the sending address of the notification message according to the sending rule parameter.

Alternatively, the sending rule parameter may include: a preset number and/or preset time length; and in step S5, the receiving end sending the latest generated notification message to the sending address of the notification message according to the sending rule parameter may include one of the following operations:
in step S51, when the sending rule parameter is the preset number, under a situation that the number of notification messages which are stored at the receiving end and are to be sent to the sending address of the notification message has already reached the preset number, the latest generated notification message in the preset number of notification messages is sent to the sending address of the notification message; or
in step S52, when the sending rule parameter is the preset time length, under a situation that a time of notification messages which are stored at the receiving end and are to be sent to the sending address of the notification message has already reached the preset time length, the latest generated notification message of all currently stored notification messages is sent to the sending address of the notification message; and
in step S53, when the sending rule parameter is the preset number and the preset time length, the latest generated notification message is sent to the sending address of the notification message according to the sending rule parameter which is firstly satisfied.

In preferred embodiments, the sending end (e.g., AE) sends a request for establishing a subscribed resource to the receiving end (e.g., CSE), herein the request for establishing a subscribed resource carries a notification sending policy and the notification sending policy may include but is not limited to at least one of the following:
(1) notification message number (equivalent to the above-mentioned maximum number);
(2) notification sending address;
(3) notification sending mode; and
(4) notification sending rule associated with notification sending mode, herein the notification sending rule may include but is not limited to at least one of the following: aggregate number (equivalent to the above-mentioned preset number) and waiting time (equivalent to the above-mentioned preset time length).

The CSE, after verifying that a request initiating party has an authority of creating a subscribed resource, creates the subscribed resource and simultaneously creates an attribute corresponding to the notification sending policy in the request for establishing a subscribed resource. If the notification sending mode in the attribute of the subscribed resource is indicated as sending the latest notification only (i.e., sending only one notification message), when a sub-resource or an attribute of the subscribed resource is changed (deleted, added or modified), the CSE temporarily saves the notification messages and respectively performs processing according to the following situations:
Situation 1: if the attribute of the subscribed resource simultaneously includes the aggregate number and waiting time, when one of the following conditions is firstly satisfied, the CSE sends the latest generated notification message in the saved notification messages thereof to the destination address in the attribute "notification sending address":
   condition i) the number of the saved notification messages reaches the aggregate number in the attribute of the subscribed resource;
   condition ii) the saving time of the notification messages reaches the waiting time in the attribute of the subscribed resource.
Situation 2: if the attribute of the subscribed resource only includes the aggregate number, when condition i) is satisfied, the CSE sends the latest generated notification message of the saved notification messages thereof to the destination address in the attribute "notification sending address".
Situation 3: if the attribute of the subscribed resource only includes the waiting time, when condition ii) is satisfied, the CSE sends the latest generated notification message in the saved notification messages thereof to the destination address in the attribute "notification sending address".

The above-mentioned preferred implementation processes will be further described below in combination with preferred embodiment 1 to preferred embodiment 3.

### Preferred embodiment 1

1. An AE sends a resource creation request to a CSE, herein information carried by the resource creation request may include but is not limited to:
   (1) resource name: "myApplication" (non-necessary parameter, if it is not provided by the AE, it may be allocated by the CSE);
   (2) resource type: "Application";
   (3) resource creation location: \\CSEBase; and
   (4) content: including an attribute which needs to be created for the resource.
2. The CSE, after receiving the resource creation request from the AE, verifies whether the AE has an authority of creating a resource, if yes, the CSE creates the resource under a resource directory \\CSEBase of the CSE, sets a resource name to be "myApplication" and sets a resource type to be "Application". Simultaneously, an attribute of the resource "myApplication" may also be created according to the content in the resource creation request.
3. The AE sends a resource creation request to the CSE, herein information carried by the resource creation request may include but is not limited to:
   (1) resource name: "mySubscription" (non-necessary parameter, if it is not provided by the AE, it is allocated by the CSE);
   (2) resource type: "Subscription";
   (3) resource creation location: \\CSEBase\myApplication; and
   (4) content: notification sending policy, herein the notification sending policy may include names of the following parameters and values corresponding to the names:
      i) notification message number: a value thereof is a positive integer, e.g., 100, and is used for indicating the maximum number of sent notification messages, and when the number of the sent notification messages reaches the number, the subscribed resource corresponding thereto will be deleted;
      ii) rule of sending in batch processing: a value thereof includes a sub-parameter aggregate number, e.g., 15, and/or a value of a waiting time, e.g., 20min; and
      iii) notification sending address: a value thereof is a Uniform Resource Identifier (URI) and is used for indicating a destination address to which notification messages are sent.
4. The CSE, after receiving the resource creation request from the AE, verifies that the AE has an authority of creating a resource and has an authority of reading a resource designated in "resource creation location", i.e., the resource "myApplication", and then creates a sub-resource "mySubscription" under the resource "myApplication", sets the attribute "notification message number" to be the value of the notification message number in a resource creation request message, sets the attribute "rule of sending in batch processing" to be the value of the rule of sending in batch processing in the resource creation request message and sets the attribute "notification sending address" to be the value of the notification sending address in the resource creation request message.
   At this moment, the resource "myApplication" is called as the subscribed resource.
5. When the attribute or the sub-resource of the resource "myApplication" on the CSE is changed, the CSE temporarily saves notification messages.
   5.1 If "rule of sending in batch processing" simultaneously includes the aggregate number and waiting time, when one of the following conditions is firstly satisfied, the CSE sends the saved notification messages thereof to the destination address in the attribute "notification sending address":
      Condition i) the number of the saved notification messages reaches the aggregate number in the attribute "rule of sending in batch processing":
         a counter may be used to count the number of notification messages which are saved by the CSE and are generated by the subscribed resource, and a value of the counter is increased by 1 each time when a notification message is generated and saved by the CSE. When the value of the counter reaches the value of the parameter aggregate number in "rule of sending in batch processing", it is considered that this condition is satisfied, and after the sending of the notification messages is completed, the counter is cleared to zero. After this round of sending is completed, a first notification which is subsequently generated is called as a first notification message, and counting is started again from this notification message.
      Condition ii) a saving time of the notification messages reaches the waiting time in the attribute "rule of sending in batch processing":
      starting from the moment that the first notification message is generated, a timer is used for timing, when a value of the timer reaches the parameter waiting time in "rule of sending in batch processing", it is considered that this condition is satisfied, and after the sending of the notification messages is completed, the timer is cleared to zero. After this round of sending is completed, a first notification which is subsequently generated is called as a first notification message, and timing is started again from this notification message.

      In preferred implementation processes, the above-mentioned counter and timer may also use downward counting and downward timing modes, initial values are set to be the values of the aggregate number and waiting time, satisfaction of the condition is also correspondingly changed to a situation in which the value of the counter or the timer reaches 0, and zero clearing is also correspondingly changed to restoring to the initial values.
      For the above-mentioned two conditions, when any one of the conditions is firstly satisfied, the counter which is counting or the timer which is timing in the other condition should be reset, i.e., cleared to zero or restored to the initial values.
   5.2 If "rule of sending in batch processing" only includes the aggregate number, when condition i) in step 5.1 is satisfied, the CSE sends the saved notification messages thereof to the destination address in the attribute "notification sending address".
   5.3 If "rule of sending in batch processing" only includes the waiting time, when condition ii) in step 5.1 is satisfied, the CSE sends the saved notification messages thereof to the destination address in the attribute "notification sending address".
6. The value of the attribute "notification message number" will be progressively decreased by one each time when the CSE sends a notification message, and when the value of "notification message number" becomes 0, the resource "mySubscription" may be deleted. If the CSE still saves notification messages which are generated by the resource "mySubscription" and are not sent, all notification messages generated by the resource "mySubscription" are deleted.
7. Whether "rule of sending in batch processing" includes only the aggregate number, the waiting time or both of the aggregate number and the waiting time, if the number of the saved notification messages reaches the value of the current "notification message number", i.e., even though condition i) and condition ii) are not satisfied (i.e., the saving time of the notification messages does not reach the waiting time in "rule of sending in batch processing" or the number of the saved notification messages does not reach the aggregate number in "rule of sending in batch processing"), the CSE still sends the saved notification messages to the destination address in the attribute "notification sending address"; or when only one of condition i) and condition ii) is satisfied, only latest generated notification messages, the number of which is equal to the notification message number in the attribute of the subscribed resource, are selected for sending. For example, if the value of "notification message number" is 5 and the number of the notification messages saved by the CSE is 10 when only one of condition i) and condition ii) is satisfied, only five latest generated notification messages are sent to the destination address in "notification sending address".

### Preferred embodiment 2

1. An AE sends a resource creation request to a CSE, herein information carried by the resource creation request may include but is not limited to:
   (1) resource name: "myApplication";
   (2) resource type: "Application";
   (3) resource creation location: \\CSEBase; and
   (4) content: including an attribute which needs to be created for the resource.
2. The CSE, after receiving the resource creation request from the AE, verifies whether the AE has an authority of creating a resource, if yes, the CSE creates the resource under a resource directory \\CSEBase of the CSE, sets a resource name to be "myApplication" and sets a resource type to be "Application". Simultaneously, an attribute of the resource "myApplication" may also be created according to the content in the resource creation request.
3. The AE sends a resource creation request to the CSE, herein information carried by the resource creation request may include but is not limited to:
   (1) resource name: "mySubscription";
   (2) resource type: "Subscription";
   (3) resource creation location: \\CSEBase\myApplication; and
   (4) content: notification sending policy, herein the notification sending policy may include names of the following parameters and values corresponding to the names:
      i) notification message number: a value thereof is a positive integer, e.g., 100, and is used for indicating the maximum number of sent notification messages, and when the number of the sent notification messages reaches the number, the subscribed resource corresponding thereto will be deleted;
      ii) rule of sending latest notification only: a value thereof includes a sub-parameter aggregate number, e.g., 15, and/or a value of a waiting time, e.g., 20min; and
      iii) notification sending address: a value thereof is a Uniform Resource Identifier (URI) and is used for indicating a destination address to which notification messages are sent.
4. The CSE, after receiving the resource creation request from the AE, verifies that the AE has an authority of creating a resource and has an authority of reading a resource designated in "resource creation location", i.e., the resource "myApplication", and then creates a sub-resource "mySubscription" under the resource "myApplication", sets the attribute "notification message number" to be the value of the notification message number in a resource creation request message, sets the attribute "rule of sending latest notification only" to be the value of the rule of sending latest notification only in the resource creation request message and sets the attribute "notification sending address" to be the value of the notification sending address in the resource creation request message.
   At this moment, the resource "myApplication" is called as the subscribed resource.
5. When the attribute or the sub-resource of the resource "myApplication" on the CSE is changed, the CSE temporarily saves notification messages.
   5.1 If "rule of sending latest notification only" simultaneously includes the aggregate number and waiting time, when one of the following conditions is firstly satisfied, the CSE sends the latest generated notification message in the saved notification messages thereof to the destination address in the attribute "notification sending address":
      Condition i) the number of the saved notification messages reaches the aggregate number in the attribute "rule of sending latest notification only":
         a counter may be used to count notification messages which are saved by the CSE and are generated by the subscribed resource, a value of the counter is increased by 1 each time when a notification message is generated and saved by the CSE. When the value of the counter reaches the value of the parameter aggregate number in "rule of sending latest notification only", it is considered that this condition is satisfied, and after the sending of the notification message is completed, the counter is cleared to zero. After this round of sending is completed, a first notification which is subsequently generated is called as a first notification message, and counting is started again from this notification message.
      Condition ii) a saving time of the notification messages reaches the waiting time in the attribute "rule of sending latest notification only":
         starting from the moment that the first notification message is generated, a timer is used for timing, when a value of the timer reaches the parameter waiting time in "rule of sending latest notification only", it is considered that this condition is satisfied, and after the sending of the notification message is completed, the timer is cleared to zero. After this round of sending is completed, a first notification which is subsequently generated is called as a first notification message, and timing is started again from this notification message.

      In preferred implementation processes, the above-mentioned counter and timer may also use downward counting and downward timing modes, initial values are set to be the values of the aggregate number and waiting time, satisfaction of the condition is also correspondingly changed to a situation in which the value of the counter or the timer reaches 0, and zero clearing is also correspondingly changed to restoring to the initial values.
      For the above-mentioned two conditions, when any one of the conditions is firstly satisfied, the counter which is counting or the timer which is timing in the other condition should be reset, i.e., cleared to zero or restored to the initial values.
   5.2 If "rule of sending latest notification only" only includes the aggregate number, when condition i) in step 5.1 is satisfied, the CSE sends the latest generated notification message in the saved notification messages thereof to the destination address in the attribute "notification sending address".
   5.3 If "rule of sending latest notification only" only includes the waiting time, when condition ii) in step 5.1 is satisfied, the CSE sends the latest generated notification message in the saved notification messages thereof to the destination address in the attribute "notification sending address".
6. The value of the attribute "notification message number" will be progressively decreased by one each time when the CSE sends a notification message, and when the value of "notification message number" becomes 0, the resource "mySubscription" may be deleted. If the CSE still saves notification messages which are generated by the resource "mySubscription" and are not sent, all notification messages generated by the resource "mySubscription" are deleted.

### Preferred embodiment 3

1. An AE sends a resource creation request to a CSE, herein information carried by the resource creation request may include but is not limited to:
   (1) resource name: "myApplication";
   (2) resource type: "Application";
   (3) resource creation location: \\CSEBase; and
   (4) content: including an attribute which needs to be created for the resource.
2. The CSE, after receiving the resource creation request from the AE, verifies whether the AE has an authority of creating a resource, if yes, the CSE creates the resource under a resource directory \\CSEBase of the CSE, sets a resource name to be "myApplication" and sets a resource type to be "Application". Simultaneously, an attribute of the resource "myApplication" may also be created according to the content in the resource creation request.
3. The AE sends a resource creation request to the CSE, herein information carried by the resource creation request may include but is not limited to:
   (1) resource name: "mySubscription";
   (2) resource type: "Subscription";
   (3) resource creation location: \\CSEBase\myApplication; and
   (4) content: notification sending policy, herein the notification sending policy may include names of the following parameters and values corresponding to the names:
      i) notification message number: a value thereof is a positive integer, e.g., 100, and is used for indicating the maximum number of sent notification messages, and when the number of the sent notification messages reaches the number, the subscribed resource corresponding thereto will be deleted;
      ii) notification sending mode: a value thereof is of an enumerated type and the mode may be one of the following: sending in batch processing and sending latest notification only;
      iii) notification sending rule: a value thereof includes a sub-parameter aggregate number, e.g., 15, and/or a value of a waiting time, e.g., 20min; and
      iv) notification sending address: a value thereof is a Uniform Resource Identifier (URI) and is used for indicating a destination address to which notification messages are sent.
4. The CSE, after receiving the resource creation request from the AE, verifies that the AE has an authority of creating a resource and has an authority of reading a resource designated in "resource creation location", i.e., the resource "myApplication", and then creates a sub-resource "mySubscription" under the resource "myApplication", sets the attribute "notification message number" to be the value of the notification message number in a resource creation request message, sets the attribute "notification sending mode" to be the value of the notification sending mode in the request message, sets the attribute "notification sending rule" to be the value of the notification sending policy in the request message, and sets the attribute "notification sending address" to be the value of the notification sending address in the request message.
   At this moment, the resource "myApplication" is called as the subscribed resource.
5. If the value of the attribute "notification sending mode" of the sub-resource "mySubscription" is "sending in batch processing", when the attribute or the sub-resource of the resource "myApplication" is changed, the CSE temporarily saves notification messages.
   5.1 If "rule of sending in batch processing" simultaneously includes the aggregate number and waiting time, when one of the following conditions is firstly satisfied, the CSE sends the saved notification messages thereof to the destination address in the attribute "notification sending address":
      Condition i) the number of the saved notification messages reaches the aggregate number in the attribute "rule of sending in batch processing":
         a counter may be used to count notification messages which are saved by the CSE and are generated by the subscribed resource, and a value of the counter is increased by 1 each time when a notification message is generated and saved by the CSE. When the value of the counter reaches the value of the parameter aggregate number in "rule of sending in batch processing", it is considered that this condition is satisfied, and after the sending of the notification messages is completed, the counter is cleared to zero. After this round of sending is completed, a first notification which is subsequently generated is called as a first notification message, and counting is started again from this notification message.
      Condition ii) a saving time of the notification messages reaches the waiting time in the attribute "rule of sending in batch processing":
         starting from the moment that the first notification message is generated, a timer is used for timing, when a value of the timer reaches the parameter waiting time in "rule of sending in batch processing", it is considered that this condition is satisfied, and after the sending of the notification messages is completed, the timer is cleared to zero. After this round of sending is completed, a first notification which is subsequently generated is called as a first notification message, and timing is started again from this notification message.

      In preferred implementation processes, the above-mentioned counter and timer may also use downward counting and downward timing modes, initial values are set to be the values of the aggregate number and waiting time, satisfaction of the condition is also correspondingly changed to a situation in which the value of the counter or the timer reaches 0, and zero clearing is also correspondingly changed to restoring to the initial values.
      For the above-mentioned two conditions, when any one of the conditions is firstly satisfied, the counter which is counting or the timer which is timing in the other condition should be reset, i.e., cleared to zero or restored to the initial values.
   5.2 If "rule of sending in batch processing" only includes the aggregate number, when condition i) in step 5.1 is satisfied, the CSE sends the saved notification messages thereof to the destination address in the attribute "notification sending address".
   5.3 If "rule of sending in batch processing" only includes the waiting time, when condition ii) in step 5.1 is satisfied, the CSE sends the saved notification messages thereof to the destination address in the attribute "notification sending address".
6. The value of the attribute "notification message number" will be progressively decreased by one each time when the CSE sends a notification message, and when the value of "notification message number" becomes 0, the resource "mySubscription" may be deleted. If the CSE still saves notification messages which are generated by the resource "mySubscription" and are not sent, all notification messages generated by the resource "mySubscription" are deleted.
7. Whether "rule of sending in batch processing" includes only the aggregate number, the waiting time or both of the aggregate number and the waiting time, if the number of the saved notification messages reaches the value of the current "notification message number", i.e., even though condition i) and condition ii) are not satisfied (i.e., the saving time of the notification messages does not reach the waiting time in "rule of sending in batch processing" or the number of the saved notification messages does not reach the aggregate number in "rule of sending in batch processing"), the CSE still sends the saved notification messages to the destination address in the attribute "notification sending address"; or when only one of condition i) and condition ii) is satisfied, only latest generated notification messages, the number of which is equal to the notification message number in the attribute of the subscribed resource, are selected for sending. For example, if the value of "notification message number" is 5 and the number of the notification messages saved by the CSE is 10 when only one of condition i) and condition ii) is satisfied, only five latest generated notification messages are sent to the destination address in the "notification sending address".

However, if the value of the attribute "notification sending mode" of the sub-resource "mySubscription" is "sending latest notification only", the above-mentioned steps 5-7 are not executed any longer but the following steps 5-6 are executed:
5. If the value of the attribute "notification sending mode" of the sub-resource "mySubscription" is "sending latest notification only", when the attribute or the sub-resource of the resource "myApplication" is changed, the CSE temporarily saves notification messages.
   5.1 If "rule of sending latest notification only" simultaneously includes the aggregate number and waiting time, when one of the following conditions is firstly satisfied, the CSE sends the latest generated notification message in the saved notification messages thereof to the destination address in the attribute "notification sending address":
      Condition i) the number of the saved notification messages reaches the aggregate number in the attribute "rule of sending latest notification only":
         a counter may be used to count notification messages which are saved by the CSE and are generated by the subscribed resource, and a value of the counter is increased by 1 each time when a notification message is generated and saved by the CSE. When the value of the counter reaches the value of the parameter aggregate number in "rule of sending latest notification only", it is considered that this condition is satisfied, and after the sending of the notification message is completed, the counter is cleared to zero. After this round of sending is completed, a first notification which is subsequently generated is called as a first notification message, and counting is started again from this notification message.
      Condition ii) a saving time of the notification messages reaches the waiting time in the attribute "rule of sending latest notification only":
         starting from the moment that the first notification message is generated, a timer is used for timing, when a value of the timer reaches the parameter waiting time in "rule of sending latest notification only", it is considered that this condition is satisfied, and after the sending of the notification message is completed, the timer is cleared to zero. After this round of sending is completed, a first notification which is subsequently generated is called as a first notification message, and timing is started again from this notification message.

      In preferred implementation processes, the above-mentioned counter and timer may also use downward counting and downward timing modes, initial values are set to be the values of the aggregate number and waiting time, satisfaction of the condition is also correspondingly changed to a situation in which the value of the counter or the timer reaches 0, and zero clearing is also correspondingly changed to restoring to the initial values.
      For the above-mentioned two conditions, when any one of the conditions is firstly satisfied, the counter which is counting or the timer which is timing in the other condition should be reset, i.e., cleared to zero or restored to the initial values.
   5.2 If "rule of sending latest notification only" only includes the aggregate number, when condition i) in step 5.1 is satisfied, the CSE sends the latest generated notification message in the saved notification messages thereof to the destination address in the attribute "notification sending address".
   5.3 If "rule of sending latest notification only" only includes the waiting time, when condition ii) in step 5.1 is satisfied, the CSE sends the latest generated notification message in the saved notification messages thereof to the destination address in the attribute "notification sending address".
6. The value of the attribute "notification message number" will be progressively decreased by one each time when the CSE sends a notification message, and when the value of "notification message number" becomes 0, the resource "mySubscription" may be deleted. If the CSE still saves notification messages which are generated by the resource "mySubscription" and are not sent, all notification messages generated by the resource "mySubscription" are deleted.

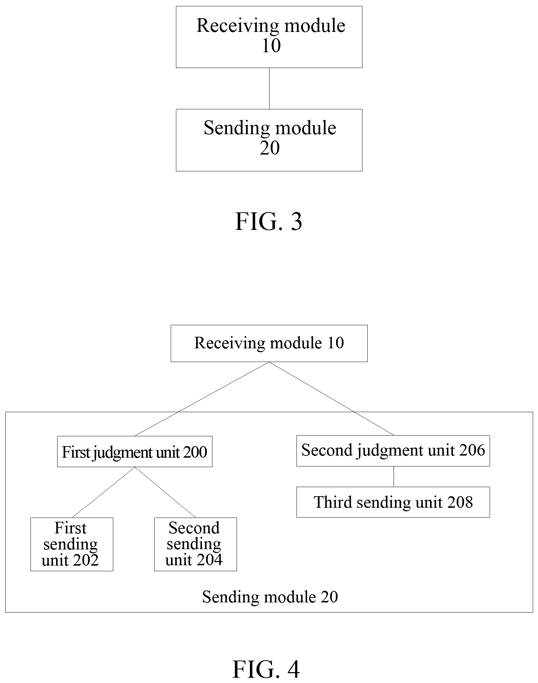

FIG. 3 is a structural diagram of a sending apparatus of a notification message according to the embodiment of the present invention. As illustrated in FIG. 3, the sending apparatus of the notification message may include: a receiving module 10 arranged to receive a request for establishing a subscribed resource from a sending end, herein the request for establishing a subscribed resource carries a notification sending policy and a sending address of a notification message, and the notification sending policy is used for the sending end to indicate, when a resource subscribed by the receiving end is changed, the receiving end to send one or more notification messages to the sending end in a sending mode designated by the sending end; and a sending module 20 arranged to, when the resource subscribed by the sending end is changed, send one or more notification messages to the sending address of the notification message according to the notification sending policy.

By adopting the apparatus illustrated in FIG. 3, the problems that the AE or the CSE frequently receives a great number of notification messages and the network resources and local storage spaces are thus wasted when resources subscribed by the AE or the CSE are changed in the related art are solved, and thus the network resources and the local storage spaces of the AE or the CSE are saved.

In preferred implementation processes, the above-mentioned sending end may be one of the following: a first CSE and an AE; and the receiving end may be a second CSE.

Alternatively, as illustrated in FIG. 4, the above-mentioned notification sending policy includes: the maximum number of notification messages sent by the receiving end to the sending address of the notification message, a sending mode of a notification message and a sending rule parameter associated with the sending mode; and the sending module 20 may include: a first judgment unit 200 arranged to, when the sending mode is indicated as a mode of sending notification messages in batch processing, judge whether the number of currently stored notification messages is smaller than a difference between the maximum number and a first number, herein the first number is the number of notification messages which have already been sent by the receiving end to the sending address of the notification message, and the maximum number and the first number are positive integers; a first sending unit 202 arranged to, if an output of the first judgment unit is yes, send a plurality of notification messages to the sending address of the notification message according to the sending rule parameter; and a second sending unit 204 arranged to, if the output of the first judgment unit is no, send a plurality of notification messages to the sending address of the notification message according to value of the difference.

Alternatively, the sending rule parameter may include: a preset number and/or a preset time length; and the first sending unit 202 is arranged to perform one of the following operations: when the sending rule parameter is the preset number, under a situation that the number of currently stored notification messages which are to be sent to the sending address of the notification message has already reached the preset number, sending the preset number of notification messages to the sending address of the notification message; when the sending rule parameter is the preset time length, under a situation that a time of currently stored notification messages which are to be sent to the sending address of the notification message has already reached the preset time length, sending all currently stored notification messages to the sending address of the notification message; and when the sending rule parameter is the preset number and the preset time length, sending one or more notification messages to the sending address of the notification message according to a sending rule parameter which is firstly satisfied.

Alternatively, as illustrated in FIG. 4, the above-mentioned notification sending policy may include: the maximum number of notification messages sent by the receiving end to the sending address of the notification message, a sending mode of a notification message and a sending rule parameter associated with the sending mode; and the sending module 20 may include: a second judgment unit 206 arranged to, when the sending mode is indicated as a mode of sending a latest generated notification message only, judge whether a first number is smaller than the maximum number, herein the first number is the number of notification messages which have already been sent by the receiving end to the sending address of the notification message; and a third sending unit 208 arranged to, if an output of the second judgment unit is yes, send the latest generated notification message to the sending address of the notification message according to the sending rule parameter.

Alternatively, the sending rule parameter includes: a preset number and/or preset time length; and the third sending unit 208 is arranged to perform one of the following operations: when the sending rule parameter is the preset number, under a situation that the number of currently stored notification messages which are to be sent to the sending address of the notification message has already reached the preset number, sending the latest generated notification message in the preset number of notification messages to the sending address of the notification message; when the sending rule parameter is the preset time length, under a situation that a time of currently stored notification messages which are to be sent to the sending address of the notification message has already reached the preset time length, sending the latest generated notification message of all currently stored notification messages to the sending address of the notification message; and when the sending rule parameter is the preset number and the preset time length, sending the latest generated notification message to the sending address of the notification message according to a sending rule parameter which is firstly satisfied.

The receiving module 10 may be implemented by a receiver in the apparatus; and the sending module 20 may be implemented by a transmitter in the apparatus.

From the description above, it can be seen that the above-mentioned embodiments realize the following technical effects (it needs to be stated that these effects are effects which can be achieved by some preferred embodiments): by adopting the technical solutions provided by the embodiments of the present invention, the sending end may flexibly select a mode of receiving notification messages according to its actual demands. Thereby, the problems that the AE or the CSE frequently receives a great number of notification messages and the network resources and local storage spaces are thus wasted when resources subscribed by the AE or the CSE are changed in the related art are solved, and thus the network resources and the local storage spaces of the AE or the CSE are saved.

Obviously, one skilled in the art should understand that each of the above-mentioned modules or steps of the present invention can be implemented through general-purpose computing devices, they can be concentrated on a single computing device or distributed over a network consisting of a plurality of computing devices, optionally they can be implemented through program codes executable by computing devices, thus they can be stored in storage devices and executed by computing devices, and under certain circumstances, the illustrated or described steps can be executed in a sequence different from the sequence here, or they can be respectively manufactured into integrated circuit modules or a plurality of modules or steps among them can be manufactured into a single integrated circuit module to implement. Therefore, the present invention is not limited to any specific combination of hardware and software.

The embodiments described above are just preferred embodiments of the present invention and are not used for limiting the present invention. For one skilled in the art, the present invention can have various alterations and changes. Any modification, equivalent replacement, improvement and the like made within the spirit and principle of the present invention shall be still included in the protection scope of the present invention.

## Claims

1. A method of sending a notification message, comprising:
receiving, by a receiving end, a request for establishing a subscribed resource from a sending end, wherein the request for establishing a subscribed resource carries a notification sending policy and a sending address of a notification message, and the notification sending policy is used for the receiving end to indicate, when a resource subscribed by the receiving end is changed, the receiving end to send one or more notification messages to the sending end in a sending mode designated by the sending end; and
sending, by the receiving end, the one or more notification messages to the sending address of the notification message according to the notification sending policy, when the resource subscribed by the sending end is changed.

2. The method according to claim 1, wherein the notification sending policy comprises: a maximum number of notification messages sent by the receiving end to the sending address of the notification message, a sending mode of a notification message and a sending rule parameter associated with the sending mode; and
when the sending mode is indicated as a mode of sending notification messages in batch processing, the receiving end sending one or more notification messages to the sending address of the notification message according to the notification sending policy comprises:
the receiving end judging whether a number of currently stored notification messages is smaller than a difference between the maximum number and a first number, wherein the first number is a number of notification messages which have already been sent by the receiving end to the sending address of the notification message, and the maximum number and the first number are positive integers;
if yes, the receiving end sending the one or more notification messages to the sending address of the notification message according to the sending rule parameter; and
if no, the receiving end sending the one or more notification messages to the sending address of the notification message according to value of the difference.

3. The method according to claim 2, wherein the sending rule parameter comprises: a preset number and/or a preset time length; and the receiving end sending the one or more notification messages to the sending address of the notification message according to the sending rule parameter comprises performing one of the following:
when the sending rule parameter is the preset number, under a situation that the number of notification messages which are stored at the receiving end and are to be sent to the sending address of the notification message has already reached the preset number, the receiving end sending the preset number of notification messages to the sending address of the notification message;
when the sending rule parameter is the preset time length, under a situation that a time of notification messages which are stored at the receiving end and are to be sent to the sending address of the notification message has already reached the preset time length, the receiving end sending all currently stored notification messages to the sending address of the notification message; and
when the sending rule parameter is the preset number and the preset time length, sending the one or more notification messages to the sending address of the notification message according to a sending rule parameter which is firstly satisfied.

4. The method according to claim 1, wherein the notification sending policy comprises:
the maximum number of notification messages sent by the receiving end to the sending address of the notification message, a sending mode of a notification message and a sending rule parameter associated with the sending mode; and when the sending mode is indicated as a mode of sending a latest generated notification message only, the receiving end sending one notification message to the sending address of the notification message according to the notification sending policy comprises:
the receiving end judging whether a first number is smaller than the maximum number, wherein the first number is the number of notification messages which have already been sent by the receiving end to the sending address of the notification message; and
if yes, the receiving end sending the latest generated notification message to the sending address of the notification message according to the sending rule parameter.

5. The method according to claim 4, wherein the sending rule parameter comprises: a preset number and/or preset time length; and the receiving end sending the latest generated notification message to the sending address of the notification message according to the sending rule parameter comprises performing one of the following:
when the sending rule parameter is the preset number, under a situation that the number of notification messages which are stored at the receiving end and are to be sent to the sending address of the notification message has already reached the preset number, the receiving end sending the latest generated notification message in the preset number of notification messages to the sending address of the notification message;
when the sending rule parameter is the preset time length, under a situation that a time of notification messages which are stored at the receiving end and are to be sent to the sending address of the notification message has already reached the preset time length, the receiving end sending the latest generated notification message of all currently stored notification messages to the sending address of the notification message; and
when the sending rule parameter is the preset number and the preset time length, sending the latest generated notification message to the sending address of the notification message according to the sending rule parameter which is firstly satisfied.

6. The method according to any one of claims 1-5, wherein,
the sending end is one of the following: a first Common Service Entity (CSE) and an Application Entity (AE); and
the receiving end is a second CSE.

7. A sending apparatus of a notification message, comprising:
a receiving module arranged to receive a request for establishing a subscribed resource from a sending end, wherein the request for establishing a subscribed resource carries a notification sending policy and a sending address of a notification message, and the notification sending policy is used for the sending end to indicate, when a resource subscribed by the receiving end is changed, the receiving end to send one or more notification messages to the sending end in a sending mode designated by the sending end; and
a sending module arranged to, when the resource subscribed by the sending end is changed, send the one or more notification messages to the sending address of the notification message according to the notification sending policy.

8. The apparatus according to claim 7, wherein the notification sending policy comprises: a maximum number of notification messages sent by the receiving end to the sending address of the notification message, a sending mode of a notification message and a sending rule parameter associated with the sending mode; and
the sending module comprises:
a first judgment unit arranged to, when the sending mode is indicated as a mode of sending notification messages in batch processing, judge whether the number of currently stored notification messages is smaller than a difference between the maximum number and a first number, wherein the first number is a number of notification messages which have already been sent by the receiving end to the sending address of the notification message, and the maximum number and the first number are positive integers;
a first sending unit arranged to, if an output of the first judgment unit is yes, send the one or more notification messages to the sending address of the notification message according to the sending rule parameter; and
a second sending unit arranged to, if the output of the first judgment unit is no, send the one or more notification messages to the sending address of the notification message according to value of the difference.

9. The apparatus according to claim 8, wherein the sending rule parameter comprises: a preset number and/or a preset time length; and
the first sending unit is arranged to perform one of the following operations:
when the sending rule parameter is the preset number, under a situation that the number of currently stored notification messages which are to be sent to the sending address of the notification message has already reached the preset number, sending the preset number of notification messages to the sending address of the notification message; or
when the sending rule parameter is the preset time length, under a situation that a time of currently stored notification messages which are to be sent to the sending address of the notification message has already reached the preset time length, sending all currently stored notification messages to the sending address of the notification message; or
when the sending rule parameter is the preset number and the preset time length, sending the one or more notification messages to the sending address of the notification message according to a sending rule parameter which is firstly satisfied.

10. The apparatus according to claim 7, wherein the notification sending policy comprises: the maximum number of notification messages sent by the receiving end to the sending address of the notification message, a sending mode of a notification message and a sending rule parameter associated with the sending mode; and the sending module comprises:
a second judgment unit arranged to, when the sending mode is indicated as a mode of sending a latest generated notification message only, judge whether a first number is smaller than the maximum number, wherein the first number is the number of notification messages which have already been sent by the receiving end to the sending address of the notification message; and
a third sending unit arranged to, if an output of the second judgment unit is yes, send the latest generated notification message to the sending address of the notification message according to the sending rule parameter.

11. The apparatus according to claim 10, wherein the sending rule parameter comprises: a preset number and/or preset time length; and
the third sending unit is arranged to perform one of the following operations:
when the sending rule parameter is the preset number, under a situation that the number of currently stored notification messages which are to be sent to the sending address of the notification message has already reached the preset number, sending the latest generated notification message in the nreset number of notification messages to the sending address of the notification message;
when the sending rule parameter is the preset time length, under a situation that a time of currently stored notification messages which are to be sent to the sending address of the notification message has already reached the preset time length, sending the latest generated notification message of all currently stored notification messages to the sending address of the notification message; and
when the sending rule parameter is the preset number and the preset time length, sending the latest generated notification message to the sending address of the notification message according to the sending rule parameter which is firstly satisfied.

12. The apparatus according to any one of claims 7-11, wherein,
the sending end is one of the following: a first Common Service Entity (CSE) and an Application Entity (AE); and
the receiving end is a second CSE.

13. A computer storage medium storing computer-executable instructions, which are used for executing the method of sending a notification message according to any one of claims 1-6.
